# EUROPEAN PATENT SPECIFICATION

(11) **EP 3 122 438 B1**
(45) Date of publication and mention of the grant of the patent: **09.10.2019**
(21) Application number: 15710134.6
(22) Date of filing: 04.03.2015
(51) Int. Cl.: B01D 39/20

(54) **POROUS PANEL**
PORÖSE PLATTE
PANNEAU POREUX

(30) Priority: 26.03.2014 EP 14161639
(43) Date of publication of application: 01.02.2017
(73) Proprietor: NV Bekaert SA, 8550 Zwevegem (BE)
(72) Inventor: VERSCHAEVE, Frank, B-8553 Otegem (BE); DEBAERDEMAEKER, Jérémie, B-8791 Beveren-Leie (BE)
(74) Representative: Vangheluwe, Lieven Germain L.
(86) International application number: PCT/EP2015/054500
(87) International publication number: WO 2015/144408

(56) References cited:
- WO-A1-2004/035174
- WO-A1-2005/025719
- WO-A2-2014/048738
- US-A- 3 469 297
- US-A- 5 665 479
- DATABASE WPI Week 199344 Thomson Scientific, London, GB; AN 1993-347674 XP002729619, & JP H05 253418 A (TOKYO ROPE MFG CO) 5 October 1993 (1993-10-05) cited in the application

## Description

### Technical Field

The invention relates to porous panels, e.g. for use in the production of filters for molten polymer processing. Examples of such filters are spin pack filters, used to filter the molten polymer prior to extruding the molten polymer through a die in the production of polymer fibers, and leaf disk filters.

### Background Art

In polymer extrusion, e.g. in the production of polymer fibers and films (e.g. high grade optical film), the molten polymer is filtered before the molten polymer is passed through the extrusion die. The filter has the function of removing impurities from the molten polymer and of shearing the molten polymer in order to break down the gels in it. In polymer fiber extrusion, such a filter is called a spin pack filter.

It is known in the art to use a layer of sand placed on a filtration membrane, as is e.g. disclosed in US5795595. The layer of sand in the spin pack filter acts to shear the molten polymer. A drawback is that preferential channels are formed in the sand, resulting in unsatisfactorily shearing. The sand can be taken along by the molten polymer and cause quality problems and or extrusion performance problems.

Alternative spin pack filters utilize a metal powder layer to shear the molten polymer, e.g. as described in EP0455492A1 and in WO12/004108A1. Metal powder layers have the drawback of having a low porosity and hence result in a high pressure drop of the molten polymer. Furthermore, a high pressure drop enhances slip through of gels, especially soft gels, which is negative for the quality of the produced polymer product.

WO2005/025719A1 discloses a spin pack filter comprising a porous structure of sintered short metal fibers having a polygonal cross-section. The short metal fibers act to shear the molten polymer. The short fibers have a length over diameter ratio between 30 and 100. WO2005/025719A1 further discloses a method to manufacture a spin pack. The method comprises the steps of providing a set of short metal fibers, introducing the set of short metal fibers into a three-dimensional shaped mold, and sintering the set of short metal fibers to form a sintered spin pack filter. The spin pack filter may comprise different fiber layers.

JP5253418A provides a sintered filter for molten polymer filtration. The filter is provided with a first filtration fiber layer made by laminating and sintering a linear metallic fiber of polygonal cross sectional shape, made by a machining or cutting method. The 2nd filtration fiber layer is made by laminating and sintering curved fine metallic fiber of circular cross sectional shape, made by bundled drawing. The filter comprises an intermediate metallic fiber layer (positioned between the first and the second filtration layer) made by laminating and sintering a metallic fiber of fine diameter of polygonal shape made by machining or cutting.

The short fiber layer of WO2005/025719A1 and the linear metallic fiber layer of JP5253418A are providing shearing properties to the filter. However, the fibers used in the shearing enhancing layers of WO2005/025719A1 and JP5253418A do not allow to be handled as unbonded (e.g. unsintered) web panel. Webs with these fibers can be made, e.g. on a plate, and sintered. The size required for the filter is cut out of the sintered layer. The size required for the filter can be cut out of panels for the other layers. The layers, with the size as required for the filter or spin pack filter, are put on top of each other. It is a problem that the manufacturing process of the spin pack filter is lengthy and complex.

### Disclosure of Invention

The primary objective of the invention is to provide a porous panel for the production of filters for molten polymer processing. The porous panel facilitates the production of filters, e.g. spin packs filters, which have high shearing properties in combination with a low pressure drop in polymer filtration.

The invention relates to a porous panel with a surface area of at least 0.5 m². Preferably the porous panel has a surface area of at least 0.75 m², more preferably of at least 1 m². The porous panel can e.g. be used in the production of filters for molten polymer processing. The porous panel comprises a first layer of metal fibers of an average equivalent diameter between 8 and 65 µm. Preferably the first layer of metal fibers comprises or is a nonwoven metal fiber web. With equivalent diameter is meant the diameter of a circle that has the same surface area as the cross sectional surface area of the fiber with non-round cross section. Preferably the equivalent diameter of the fibers is between 8 and 55 µm; preferably between 8 and 50 µm, more preferably between 8 and 25 µm, even more preferably between 8 and 16 µm. The equivalent diameter of the fibers can e.g. be between 25 and 40 µm. The equivalent diameter of the fibers can e.g. be between 45 and 60 µm. The cross-section of the metal fibers of the first layer of metal fibers has two neighboring straight sides with an included angle of less than 90° and one or more irregularly shaped curved sides. The metal fibers of the first layer of metal fibers have an average length of at least 6 mm. Preferably, the metal fibers of the first layer of metal fibers have an average length of at least 8 mm, more preferably of at least 10 mm, and preferably less than 25 mm, more preferably less than 20 mm. The metal fibers of the first layer of metal fibers are bonded to each other by means of metal bonds, wherein the metal of the metal fibers of the first layer of metal fibers is the bonding agent forming the metal bonds. The porous panel comprises a second layer of metal fibers. Preferably the first layer of metal fibers comprises or is a nonwoven metal fiber web. The average equivalent diameter of the metal fibers of the second layer of metal fibers is smaller than the average equivalent diameter of the metal fibers of the first layer of metal fibers. The first layer of metal fibers and the second layer of metal fibers are bonded to each other by means of metal bonds; wherein the metal of the metal fibers of the first layer of metal fibers and of the second layer of metal fibers is the bonding agent forming the metal bonds.

The specific composition of both layers of metal fibers (the first layer of metal fibers and the second layer of metal fibers) allow that the layers can be handled, e.g. rolled and transported as an unbonded (unsintered, not welded) web. This allows putting large surfaces of the layers in web form on top of each other and to sinter or weld this large surface. This way, the porous panel of the invention can be made. From the porous panel, the surface size required for a number of filters (e.g. spin pack filters) for molten polymer filtration can be cut or punched. The number of process steps to make the filters (e.g. the spin pack filters) is drastically reduced. The filter obtained combines excellent shearing properties, low pressure drop and long lifetime, thanks to the specific combination of the layers of metal fibers.
In order to achieve the production of the porous panel of the invention, especially the length of the metal fibers of the first layer of metal fibers - as specified in the invention - showed to be critical.

The porous panel can be used in the production of filters for filtration of molten polymers. The function of the filter is to filter molten polymer in polymer processing (e.g. in polymer extrusion), e.g. in the production of polymer films and polymer fibers. The first layer of metal fibers of the filter has the predominant function of breaking gels contained in the molten polymer by shearing them, whereas the second layer of metal fibers will basically act as a depth filter for capturing impurities from the molten polymer. The filter made with the porous panel of the invention has excellent shearing properties in combination with a low pressure drop in polymer filtration. It is believed that the cross sectional shape of the metal fibers of the first layer of metal fibers - with its outspoken angularity -, and the predominantly two-dimensional positioning of the fibers in the first layer of metal fibers, thanks to their relatively long length, create synergistic effects resulting in improved gel shearing.

The porous panel of the invention can be used to make filters, e.g. spin pack filters or leaf disk filters, by cutting or punching a filter membrane of the required size out of the porous panel of the invention.

Metal fibers having two neighboring straight sides with an included angle of less than 90° and one or more irregularly shaped curved sides can be manufactured in the way as described in WO2014/048738A2.

Preferably, the second layer of metal fibers comprises metal fibers that have an average equivalent diameter between 2 and 50 µm, more preferably between 8 and 40 µm. Preferably, the second layer of metal fibers comprises metal fibers that have an average length of at least 6 mm. Preferably, the second layer of metal fibers comprises metal fibers that have an average length of at least 8 mm, more preferably of at least 10 mm, and preferably less than 25 mm, more preferably less than 20 mm.

It is also possible that the second layer of metal fibers is a multilayered web of metal fibers, with sub-layers in the multilayer of different equivalent diameter, preferably wherein the equivalent diameter of each sub-layer of the second layer of metal fibers is smaller than the average equivalent diameter of the metal fibers of the first layer of metal fibers.

In a preferred porous panel, the second layer of metal fibers comprises at least two sub-layers, wherein the metal fibers of at least two sub-layers differ in average equivalent diameter; wherein a sub-layer closest to the first layer of metal fibers comprises metal fibers of higher average equivalent diameter than a sub-layer further away from the first layer of metal fibers.

In a preferred porous panel, the metal fibers of the first layer of metal fibers have a standard deviation between fibers of the equivalent fiber diameter of less than 25% of the equivalent fiber diameter. More preferably of less than 20% of the equivalent diameter, even more preferably of less than 15% of the equivalent diameter.
A more regular fiber diameter of the metal fiber of the first layer of metal fibers has a further synergistic beneficial effect on the gel shearing properties of the filter made with such a porous panel. It is believed that this effect is achieved through the different pore size distribution in the first layer of metal fibers thanks to the more regular fiber diameter. By making a cross section of the first layer of metal fibers, it can be observed that pores are more regular than when using prior art fibers with higher variation in equivalent diameter. Fiber layers made with metal fibers of a same average equivalent fiber diameter but with high variation in equivalent diameter have shown to have large variation in pore sizes, and specifically a larger number of large pores have shown to be present.

In a preferred embodiment of the invention, the metal fibers of the first layer of metal fibers have an average equivalent diameter between 8 and 20 µm. A low equivalent fiber diameter has further synergistic effect improving the gel shearing performance of the filter. Such fibers with an average equivalent diameter between 8 and 20 µm can e.g. be made out of metal alloy AISI 316 with a good uniformity of the equivalent fiber diameter.

A preferred porous panel comprises a first layer of metal fibers of at least 1000 g/m², more preferably of at least 2000 g/m².

A preferred porous panel comprises a metal wire mesh, wherein the metal wire mesh is bonded in the porous panel by means of metal bonds, e.g. by means of sinter bonds or be means of welded bonds (e.g. capacitor discharge welded bonds). The metal wire mesh can e.g. be a woven metal wire mesh or a welded mesh. The metal wire mesh is preferably a stainless steel wire mesh, or a wire mesh out of a NiCr alloy or out of a FeCrNi alloy. Preferred are NiCr or FeCrNi alloys with at least 40% by weight of nickel and at least 14% by weight of chromium.
In a preferred embodiment, the metal wire mesh is bonded by means of metal bonds to the second layer of metal fibers, at the side of the second layer of metal fibers opposite to the side of the first layer of metal fibers.

In a preferred embodiment, the second layer of metal fibers comprises metal fibers having a cross-section that has two neighboring straight sides with an included angle of less than 90° and one or more irregularly shaped curved sides. Such fibers can be made in the same way as the fibers for the first layer of metal fibers.
Although the function of the second layer of metal fibers in a filter made with the porous panel is predominantly capturing impurities from the molten polymer, it is a benefit of this embodiment that the second layer of metal fibers provides additional enhanced gel shearing properties to filters made from the porous panel. Preferably, the metal fibers of the second layer of metal fibers have a standard deviation between fibers of the equivalent fiber diameter of less than 25% of the equivalent fiber diameter. More preferably of less than 20% of the equivalent diameter, even more preferably of less than 15% of the equivalent diameter.

In a preferred porous panel, the second layer of metal fibers comprises metal fibers having a hexagonal cross section. Such fibers, e.g. stainless steel fibers, can be manufactured by means of bundled drawing, as is e.g. described in US3379000.

In a preferred embodiment, the metal bonds are sinter bonds or welded bonds, e.g. welded bonds by means of capacitive discharge welding (CDW).

In a preferred embodiment, the porosity of the first layer of metal fibers is between 50% and 80%, preferably between 60% and 70%. Such porosity range for the first layer of metal fibers results in optimum performance, especially in terms of pressure drop and non-compressibility of the porous panel when used in a filter.

In a preferred embodiment, the porosity of the second layer of metal fibers is between 50% and 80%; preferably between 60% and 70%. Such porosity range for the second layer results in optimum performance, especially in terms of pressure drop and non-compressibility of the porous panel when used in a filter.

Any type of stainless steel alloy can be used for the metal fibers of the first layer and/or for the second layer of metal fibers of the filter, e.g. stainless steel fibers from AISI 300 or AISI 400-serie alloys or alloys comprising iron, aluminum and chromium. Stainless steel comprising chromium, aluminum and/or nickel and 0.05 to 0.3 percent by weight of yttrium, cerium, lanthanum, hafnium or titanium (known as Fecralloy®), can be used. Examples of stainless steel alloys that can be used are AISI 316 and AISI 304. It is also possible to use NiCr alloy fibers and/or FeCrNi alloy fibers as metal fibers in the first layer of metal fibers and/or in the second layer of metal fibers. Preferred are NiCr or FeCrNi alloys that comprise at least 40% by weight of nickel and at least 14% by weight of chromium. An example of a suitable FeNiCr alloy for the metal fibers is UNSN06601, and/or its equivalent designation 2.4851 according to EN 10088-1:2005: this alloy has a nickel content between 58 and 63% by weight and a chromium content between 21.0 and 25.0% by weight. An example of a suitable NiCr alloy is UNS N06686 comprising 21% by weight of chromium, 16.3% by weight of molybdenum, 3.9% of tungsten and the balance nickel.

For use in the invention, any type of combination can be made of metal fibers for the first layer and of metal fibers for the second layer, e.g. out of the alloys mentioned. Preferred however is when the metal fibers of the first layer of metal fibers and the metal fibers of the second layer of metal fibers are made out of the same alloy composition.

In a particularly beneficial porous panel, the first layer of metal fibers is built up by superimposing a number of metal fiber webs. E.g. 2 - 8, e.g. 5 or 6 webs can be superimposed on top of each other. Such a process results in a porous panel - and therefore in a filter when using the porous panel to produce a filter - with a first layer of metal fibers that have a more two-dimensional orientation in the plane of the filter, believed to contribute to the improved shearing performance of the filter.

In a preferred embodiment, the porous panel comprises at both of its outer sides a metal wire mesh, e.g. a woven wire mesh, e.g. a stainless wire mesh, bonded into the porous panel by means of metal bonds. The metal bonds can e.g. be sinter bonds or welded bonds. Such an embodiment is particularly suited for use in the production of leaf disk filters.

### Brief Description of the Drawings

Figure 1 shows the cross section of a porous panel according to the invention.
Figures 2 - 7 show examples of fiber cross sections of metal fibers that can be used for the first layer of metal fibers of the filter
Figure 8 shows an exemplary set up for fiber machining to manufacture metal fibers of an average length of at least 6 mm and that have a cross-section that has two neighboring straight sides with an included angle of less than 90° and one or more irregularly shaped curved sides.
Figure 9 shows a filter of a circular shape that can be made using the porous panel according to the invention.
Figure 10 shows a filter with a half moon shape that can be made using the porous panel according to the invention.

### Mode(s) for Carrying Out the Invention

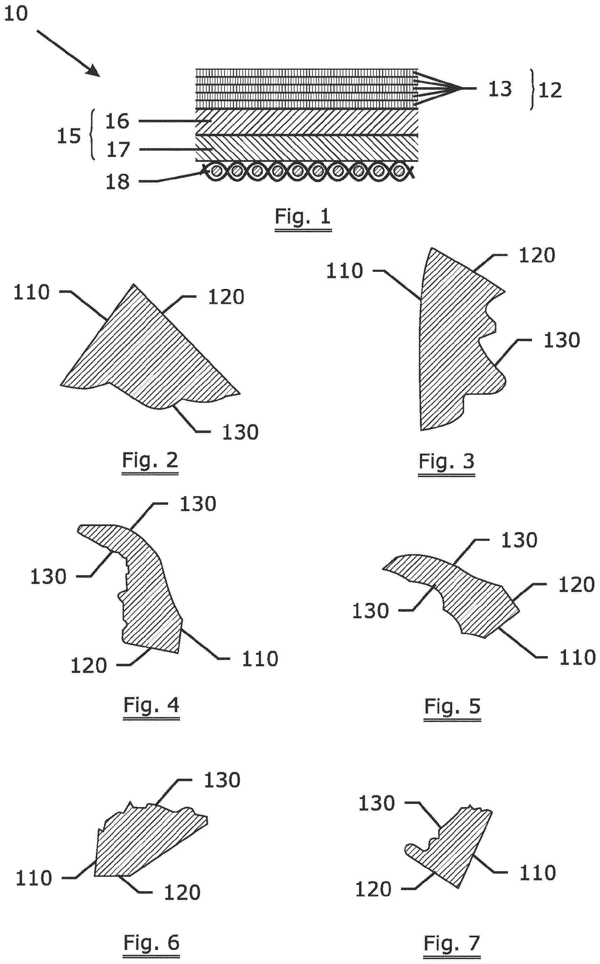

Figure 1 shows the cross section 10 of a porous panel according to the invention. The porous panel comprises a first layer 12 of metal fibers. The metal fibers of the first layer of metal fibers have a cross-section having two neighboring straight sides with an included angle of less than 90° and one or more irregularly shaped curved sides. The metal fibers of the first layer of metal fibers have an average length of at least 6 mm, e.g. of 8 mm. The first layer 12 has been built up by superimposing a number of webs of such metal fibers, e.g. five webs 13. It is clear however that the first layer 12 can be made by using one web or by using any other number of webs superimposed on top of each other. The metal fibers of the first layer of metal fibers are bonded to each other by metal bonds; e.g. by means of sintering, although welding is an alternative technique that can be used, e.g. capacitive discharge welding (CDW).
The porous panel 10 comprises a second layer of metal fibers 15. The average equivalent diameter of the metal fibers of the second layer of metal fibers 15 is smaller than the average equivalent diameter of the metal fibers of the first layer 12. In the example, the second layer 15 comprises two sub-layers 16, 17. The metal fibers of the two sub-layers 16, 17 differ in average equivalent diameter. The sub-layer 16 closest to the first layer 12 of metal fibers comprises metal fibers of higher average equivalent diameter than the sub-layer 17 further away from the first layer of metal fibers.
The filter 10 comprises a metal wire mesh 18. The first layer 12, the second layer 15 and the metal wire mesh 18 are bonded to each other by metal bonds; e.g. by means of sintering, although welding is an alternative technique that can be used, e.g. capacitive discharge welding (CDW).

Figures 2 - 7 show examples of fiber cross sections of metal fibers that can be used for the first layer of metal fibers of the filter. The fiber cross sections have two neighboring straight lined sides 110, 120 with an included angle of less than 90° and one or more irregularly shaped curved sides 130. Metal fibers having such cross-sections can also be used in the second layer of metal fibers. Such fibers can be made according to the method described in WO2014/048738A2. Such fibers for the first layer of metal fibers (and for embodiments of the second layer of metal fibers) - fibers that have a cross-section that has two neighboring straight sides with an included angle of less than 90° and one or more irregularly shaped curved sides - can be made according to the method comprising the steps of:
- fixing on a lathe a metal piece (or work piece), for instance an ingot, from which the metal fibers will be cut;
- mounting a tool on a tool holder and sliding the tool holder with a feed rate along the axis of the lathe;
- imposing a vibration upon the tool thereby cutting metal fibers from the metal piece;
- measuring the rotational speed of the lathe and using the measurement signal in order to dynamically synchronize (preferably steer and synchronize) the vibration frequency of the tool with the rotational speed of the lathe by means of an electronic control circuit. The vibration of the tool can be obtained by means of a piezomotor, the frequency of which is controlled. This method results in metal fibers with a cross-section having two neighboring straight sides with an included angle of less than 90° and one or more irregularly shaped curved sides. This follows from the way the tool cuts fibers out of the work piece. A previous cut formed two straight lines, during cutting the fiber, the first will be deformed in an irregularly shaped curve the second stays straight and forms an included angle of less than 90° with a newly formed straight edge. The latter is formed by the cutting action on the cutting plane of the knife. The one or more irregularly shaped curved sides are formed by upsetting/bulging of a side not in contact with the cutting tool during the cutting process, by the compressive forces in the material being cut.

This way, metal fibers can be made that have a low standard deviation between fibers of the equivalent fiber diameter.

Fibers of discrete length are produced by exiting the cutting tool each vibration cycle out of the tool. This way of working has the benefit that fibers with low variation in length can be produced.

Preferably, a ball bearing, and more preferably a pre-tensioned ball bearing, is used to slide the tool holder along the axis of the lathe. This feature further ensures low variation between fibers of the equivalent diameter of the fibers.

Alternatively, the sliding of the tool holder along the axis of the lathe can be realized by means of a direct drive by means of a linear motor, meaning that no reduction of motor speed nor clutch is required.

Preferably, the tool holder set up and/or tool mounting is such that displacement of the tool due to bending of the tool holder during fiber cutting is less than 5 µm, preferably less than 2 µm. This feature improves the uniformity of the equivalent diameter of the fibers that are produced.

Preferably, the tool holder and/or the tool is supported in order to minimize or prevent bending of the tool holder due to the cutting forces.

Preferably, the tool holder and/or the tool is supported by a mechanical support, more preferably the mechanical support is connected to the block onto which the tool holder is mounted. The tool and/or the tool holder can e.g. vibrate in a bush. With this embodiment, it is possible to obtain metal fibers with even lower variation between fibers of the equivalent fiber diameter.

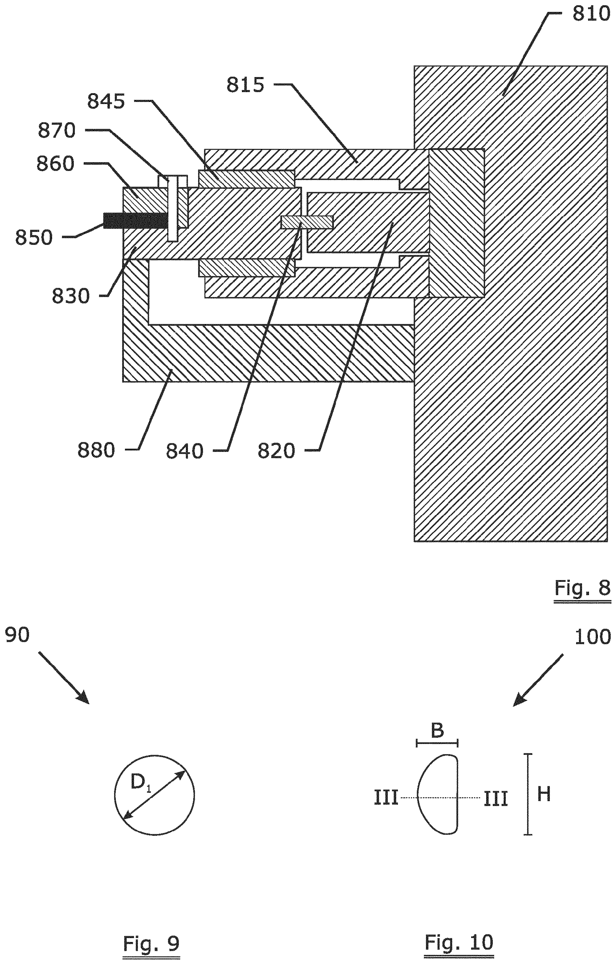

Figure 8 shows a cross section of an exemplary set up for the fiber cutting for fiber machining to manufacture metal fibers of an average length of at least 6 mm and that have a cross-section that has two neighboring straight sides with an included angle of less than 90° and one or more irregularly shaped curved sides. A block 810 is provided. Block 810 will slide with a constant speed along the axis of the lathe (not shown in the figure). The sliding movement can be provided via a pre-tensioned ball bearing.
A housing 815 is fixed to the block 810. The housing 815 comprises a piezomotor 820. The vibration frequency of a few thousand Hertz is synchronized via electronic means (using an appropriate controller) with the revolving speed of the lathe, via measurement of the revolving speed of the lathe. A tool holder 830 is connected via a connection 840 to the piezomotor, hence the tool holder 830 will vibrate in the bush 845 thanks to the action of the piezomotor. A chisel (cutting tool) 850 is fixed by means of a clamp 860 and a bolt 870 onto tool holder 830. A supporting piece 880 which is fixed to the block 810 is supporting the tip of the chisel 850 as it is supporting the tool holder 830 under the position of the tip of the chisel 850.
The dimensions of the cross section of the metal fibers can be determined via image analysis.

As an example of the invention, a porous panel has been made of size 1.5 m by 1 m. In making the porous panel, a first layer of 3000 g/m² of stainless steel fibers of average equivalent diameter of 35 µm with a cross-section having two neighboring straight sides with an included angle of less than 90° and one or more irregularly shaped curved sides, with an average length of 8 mm and with a standard deviation between fibers of the equivalent fiber diameter of 18.1 % of the equivalent fiber diameter is provided. This first layer of metal fibers can e.g. be built up by superimposing 5 webs of 600 g/m² each. The webs have been made by means of a dry-laid nonwoven production process wherein panels of 1.2 m by 1.5 m have been made. It is also possible to manufacture rolls of web. The panels are put on top of each other to build the first layer of stainless steel fibers. As an alternative to dry-laid nonwovens, wet laid webs can be used, or any other technology to make a stainless steel fiber nonwoven web.
In the first layer, instead of fibers of 35 µm equivalent diameter, fibers of other equivalent fiber diameters can be used, e.g. 50 µm, 22 µm, 12 µm or 8 µm; e.g. in AISI 316 steel grade.
A second layer of stainless steel fibers is provided. The second layer comprises two sub-layers. The sub-layer that will be closest to the first layer of stainless steel fibers comprises 450 g/m² of stainless steel fibers of 22 µm equivalent diameter and the sub-layer that will be positioned further away from the first layer of stainless steel fibers comprises 900 g/m² stainless steel fiber of 12 µm equivalent diameter. Both sub-layers comprise bundle drawn stainless steel fibers and thus fibers of hexagonal cross section. Alternatively however, it is also possible to use stainless steel fibers that have a cross-section that has two neighboring straight sides with an included angle of less than 90° and one or more irregularly shaped curved sides, e.g. fibers of an average length of at least 6 mm. Each of the sub-layers is made by means of carding, wherein panels of 1.2 m by 1.5 m have been made. It is also possible to manufacture rolls of web. The panels for the sub-layers have been superimposed in the correct order on the first layer.
A woven stainless steel wire mesh, a K-mesh, has been provided and put on top of the second layer. This way, a porous panel is built up.
After putting all the layers on tops of each other, the porous panel was bonded by means of sintering in a sinter oven in order to obtain a panel of size 1.5 m by 1 m according to the invention. Alternatively the panel can be bonded by means of capacitive discharge welding, welding the stainless steel fibers to each other and to the woven wire mesh at cross over contacting points.

The obtained porous panel - and also the filters punched out of it - had a thickness of 1.75 mm, a weight of 5650 g/m², a porosity of 59.8%, an air permeability of 42.4 litre/(dm²*min) as measured at a differential pressure of 200 Pa and according to ISO4022; and a bubble point pressure of 2240 Pa, as measured according to ASTM E128-61. Tests have shown that the filters provided excellent shearing results.

As an alternative for making the porous panel via superimposing and sintering panels of a certain size, e.g. 1.5 m by 1 m; it is also possible to unwind web layers from rolls, and superimpose them, together with the appropriate mesh layer, if required, in order to make a porous panel that can be sintered.
If such porous panel is made in continuous length, continuous sintering or welding (e.g. capacity discharge welding) is possible in order to bond the superimposed layer. After bonding, the porous panel can be cut to a size to enable its transport, e.g. to a panel size of e.g. 1.5 m by 1 m.

An alternative exemplary porous panel according to the invention comprises a first layer of 675 g/m² of stainless steel fibers of average equivalent diameter of 8 µm with a cross-section having two neighboring straight sides with an included angle of less than 90° and one or more irregularly shaped curved sides and a length of 10 mm. The porous panel comprises a second layer of stainless steel fibers, comprising a sub-layer of 300 g/m² of stainless steel fibers with hexagonal cross section (made via bundled drawing) of average equivalent diameter 8 µm; a sub-layer of 150 g/m² of stainless steel fibers with hexagonal cross section (made via bundled drawing) of average equivalent diameter 6.5 µm; and a sub-layer of 300 g/m² of stainless steel fibers with hexagonal cross section (made via bundled drawing) of average equivalent diameter 4 µm.
The porous panel can comprise a stainless steel wire mesh. The first layer of stainless steel fibers, the second layer of stainless steel fibers and the mesh - if present - are bonded by means of sintering. The porous panel can also comprise a stainless steel wire mesh at its both sides; e.g. bonded in the porous panel by means of sintering or welding. Such porous panels are especially suited for production of filters for gel shearing and filtration of molten polymers using leaf disks in polymer film extrusion.

A yet alternative porous panel according to the invention comprises a first layer of stainless steel fibers of 1200 g/m², comprising a first sub-layer of 900 g/m² of stainless steel fibers of average equivalent diameter of 22 µm with a cross-section having two neighboring straight sides with an included angle of less than 90° and one or more irregularly shaped curved sides and a length of 10 mm; and a second sub-layer of 300 g/m² of stainless steel fibers of average equivalent diameter of 12 µm with a cross-section having two neighboring straight sides with an included angle of less than 90° and one or more irregularly shaped curved sides and a length of 10 mm. The porous panel comprises a second layer of stainless steel fibers, comprising a sub-layer of 300 g/m² of stainless steel fibers with hexagonal cross section (made via bundled drawing) of average equivalent diameter 8 µm.
The porous panel can comprise a stainless steel wire mesh at one of its sides. The stainless steel wire mesh can e.g. be bonded by means of metal bonds (e.g. sinter bonds) to the second layer of stainless steel fibers, at the side of the second layer of stainless steel fibers opposite to the side of the first layer of stainless steel fibers. The porous panel can comprise a stainless steel wire mesh at both sides of the porous panel. The first layer of stainless steel fibers, the second layer of stainless steel fibers and the mesh or meshes - if present - are bonded by means of sintering. Such a porous panel is especially suited for production of a filter for gel shearing and filtration of molten polymers using leaf disks in polymer film extrusion.

Out of the porous panels of the invention, filters of various shapes can be cut or punched. Figure 9 shows a filter 90 punched out of the porous panel of the invention and has a circular surface shape with diameter D1, e.g. 80 mm. Figure 10 shows a filter 100 punched out of the porous panel of the invention and that has a half moon shape, e.g. with dimensions H 80 mm and B 40 mm. Other shapes for the filter are possible, e.g. the shapes that are known and in use for polymer filtration. The filters made this way has shown to provide excellent shearing properties and excellent filtrations performance - removal of dirt particles - in filtering molten polymer.

## Claims

1. A porous panel with a surface area of at least 0.5 m², e.g. for use in the production of filters for molten polymer processing, comprising
- a first layer of metal fibers of average equivalent diameter between 8 and 65 µm;
wherein the metal fibers of the first layer of metal fibers have a cross-section, wherein the cross section has two neighboring straight sides with an included angle of less than 90° and one or more irregularly shaped curved sides;
and wherein the metal fibers of the first layer of metal fibers have an average length of at least 6 mm;
wherein the metal fibers of the first layer of metal fibers are bonded to each other by means of metal bonds; wherein the metal of the metal fibers of the first layer is the bonding agent forming the metal bonds;
- a second layer of metal fibers; wherein the average equivalent diameter of the metal fibers of the second layer of metal fibers is smaller than the average equivalent diameter of the metal fibers of the first layer of metal fibers;
- and wherein the first layer of metal fibers and the second layer of metal fibers are bonded to each other by means of metal bonds; wherein the metal of the metal fibers of the first layer of metal fibers and of the second layer of metal fibers is the bonding agent forming the metal bonds.

2. A porous panel as in claim 1, wherein the metal fibers of the first layer of metal fibers have a standard deviation between fibers of the equivalent fiber diameter of less than 25% of the equivalent fiber diameter.

3. A porous panel as in any of the preceding claims, wherein the second layer of metal fibers comprises at least two sub-layers, wherein the metal fibers of the at least two sub-layers differ in average equivalent diameter; wherein a sub-layer closest to the first layer of metal fibers comprises metal fibers of higher average equivalent diameter than a sub-layer further away from the first layer of metal fibers.

4. A porous panel as in any of the preceding claims, further comprising a metal wire mesh, wherein the metal wire mesh is bonded in the panel by means of metal bonds.

5. A porous panel as in claim 4, wherein the metal wire mesh is bonded by means of metal bonds to the second layer of metal fibers, at the side of the second layer of metal fibers opposite to the side of the first layer of metal fibers.

6. A porous panel as in any of the preceding claims, wherein the second layer of metal fibers comprises metal fibers having a hexagonal cross section.

7. A porous panel as in any of the preceding claims, wherein the second layer of metal fibers comprises metal fibers that have a cross section, wherein the cross section has two neighboring straight sides with an included angle of less than 90° and one or more irregularly shaped curved sides.

8. A porous panel as in any of the preceding claims, wherein the porosity of the first layer of metal fibers is between 50% and 80%.

9. A porous panel as in any of the preceding claims, wherein the porous panel comprises at both of its outer sides a wire mesh bonded into the porous panel by means of metal bonds.

## Patentansprüche

1. Poröse Platte mit einer Oberfläche von mindestens 0,5 m², z. B. zur Verwendung in der Produktion von Filtern zur Verarbeitung von geschmolzenem Polymer, umfassend:
- eine erste Schicht aus Metallfasern mit einem durchschnittlichen Äquivalenzdurchmesser zwischen 8 und 65 µm;
wobei die Metallfasern in der ersten Schicht der Metallfasern einen Querschnitt aufweisen, wobei der Querschnitt zwei benachbarte gerade Seiten, deren eingeschlossener Winkel kleiner als 90° ist, und eine oder mehrere unregelmäßig geformte gekrümmte Seiten aufweist;
und wobei die Metallfasern der ersten Schicht der Metallfasern eine durchschnittliche Länge von mindestens 6 mm aufweisen;
wobei die Metallfasern der ersten Schicht der Metallfasern mittels Metallbindungen aneinander gebunden sind; wobei das Metall der Metallfasern der ersten Schicht das Bindungsmittel ist, welches die Metallbindungen bildet;
- eine zweite Schicht aus Metallfasern; wobei der durchschnittliche Äquivalenzdurchmesser der Metallfasern von der zweiten Schicht der Metallfasern kleiner als der durchschnittliche Äquivalenzdurchmesser der Metallfasern von der ersten Schicht der Metallfasern ist;
- und wobei die erste Schicht der Metallfasern und die zweite Schicht der Metallfasern mittels Metallbindungen aneinander gebunden sind; wobei das Metall der Metallfasern der ersten Schicht der Metallfasern und der zweiten Schicht der Metallfasern das Bindungsmittel ist, welches die Metallbindungen bildet.

2. Poröse Platte nach Anspruch 1, wobei die Metallfasern der ersten Schicht der Metallfasern eine Standardabweichung zwischen Fasern des Äquivalenzfaserdurchmessers von weniger als 25 % des Äquivalenzfaserdurchmessers aufweisen.

3. Poröse Platte nach einem der vorhergehenden Ansprüche, wobei die zweite Schicht der Metallfasern mindestens zwei Teilschichten umfasst, wobei die Metallfasern der mindestens zwei Teilschichten sich im durchschnittlichen Äquivalenzdurchmesser unterscheiden; wobei eine Teilschicht, die der ersten Schicht der Metallfasern am nächsten ist, Metallfasern mit höherem durchschnittlichen Äquivalenzdurchmesser als eine Teilschicht umfasst, die sich weiter entfernt von der ersten Schicht der Metallfasern befindet.

4. Poröse Platte nach einem der vorhergehenden Ansprüche, des Weiteren umfassend ein Metalldrahtmaschenmaterial, wobei das Metalldrahtmaschenmaterial mittels Metallbindungen in der Platte gebunden ist.

5. Poröse Platte nach Anspruch 4, wobei das Metalldrahtmaschenmaterial an der Seite der zweiten Schicht der Metallfasern, die der Seite der ersten Schicht von Metallfasern gegenüber liegt, mittels Metallbindungen an die zweite Schicht der Metallfasern gebunden ist.

6. Poröse Platte nach einem der vorhergehenden Ansprüche, wobei die zweite Schicht der Metallfasern Metallfasern mit sechseckigem Querschnitt umfasst.

7. Poröse Platte nach einem der vorhergehenden Ansprüche, wobei die zweite Schicht der Metallfasern Metallfasern umfasst, die einen Querschnitt aufweisen, wobei der Querschnitt zwei benachbarte gerade Seiten, deren eingeschlossener Winkel kleiner als 90° ist, und eine oder mehrere unregelmäßig geformte gekrümmte Seiten aufweist.

8. Poröse Platte nach einem der vorhergehenden Ansprüche, wobei die Porosität der ersten Schicht der Metallfasern zwischen 50 % und 80 % liegt.

9. Poröse Platte nach einem der vorhergehenden Ansprüche, wobei die poröse Platte an beiden ihrer Außenseiten ein Drahtmaschenmaterial umfasst, das mittels Metallbindungen in die poröse Platte hinein gebunden ist.

## Revendications

1. Panneau poreux ayant une aire de surface d'au moins 0,5 m², destiné par exemple à une utilisation dans la production de filtres pour la transformation de polymères fondus, comprenant :
- une première couche de fibres métalliques ayant un diamètre équivalent moyen de 8 à 65 µm ;
dans lequel les fibres métalliques de la première couche de fibres métalliques ont une section transversale, la section transversale comportant deux côtés rectilignes voisins avec un angle inclus inférieur à 90 ° et un ou plusieurs côtés incurvés de forme irrégulière ;
et dans lequel les fibres métalliques de la première couche de fibres métalliques ont une longueur moyenne d'au moins 6 mm ;
dans lequel les fibres métalliques de la première couche de fibres métalliques sont liées les unes aux autres au moyen de liaisons métalliques, le métal des fibres métalliques de la première couche étant l'agent de liaison formant les liaisons métalliques ;
- une deuxième couche de fibres métalliques, le diamètre équivalent moyen des fibres métalliques de la deuxième couche de fibres métalliques étant inférieur au diamètre équivalent moyen des fibres métalliques de la première couche de fibres métalliques ;
- et dans lequel la première couche de fibres métalliques et la deuxième couche de fibres métalliques sont liées l'une à l'autre au moyen de liaisons métalliques, le métal des fibres métalliques de la première couche de fibres métalliques et de la deuxième couche de fibres métalliques étant l'agent de liaison formant les liaisons métalliques.

2. Panneau poreux selon la revendication 1, dans lequel les fibres métalliques de la première couche de fibres métalliques ont un écart type entre les fibres du diamètre équivalent des fibres qui est inférieur à 25 % du diamètre équivalent des fibres.

3. Panneau poreux selon l'une quelconque des revendications précédentes, dans lequel la deuxième couche de fibres métalliques comprend au moins deux sous-couches, les fibres métalliques desdites au moins deux sous-couches ayant différents diamètres équivalents moyens, une sous-couche la plus proche de la première couche de fibres métalliques comprenant des fibres métalliques ayant un diamètre équivalent moyen supérieur à celui d'une sous-couche plus éloignée de la première couche de fibres métalliques.

4. Panneau poreux selon l'une quelconque des revendications précédentes, comprenant en outre une maille en fil métallique, dans lequel la maille en fil métallique est liée dans le panneau au moyen de liaisons métalliques.

5. Panneau poreux selon la revendication 4, dans lequel la maille en fil métallique est liée au moyen de liaisons métalliques à la deuxième couche de fibres métalliques, sur le côté de la deuxième couche de fibres métalliques opposé au côté de la première couche de fibres métalliques.

6. Panneau poreux selon l'une quelconque des revendications précédentes, dans lequel la deuxième couche de fibres métalliques comprend des fibres métalliques ayant une section transversale hexagonale.

7. Panneau poreux selon l'une quelconque des revendications précédentes, dans lequel la deuxième couche de fibres métalliques comprend des fibres métalliques qui ont une section transversale, la section transversale comportant deux côtés rectilignes voisins avec un angle inclus inférieur à 90 ° et un ou plusieurs côtés incurvés de forme irrégulière.

8. Panneau poreux selon l'une quelconque des revendications précédentes, dans lequel la porosité de la première couche de fibres métalliques est de 50 % à 80 %.

9. Panneau poreux selon l'une quelconque des revendications précédentes, le panneau poreux comprenant sur ses deux côtés extérieurs une maille en fil métallique liée dans le panneau poreux au moyen de liaisons métalliques.
